# EUROPEAN PATENT SPECIFICATION

(11) **EP 4 005 879 B1**
(45) Date of publication and mention of the grant of the patent: **25.12.2024**
(21) Application number: 21209287.8
(22) Date of filing: 19.11.2021
(51) Int. Cl.: B60R 21/055, F16F 7/12, B60R 21/02

(54) **ENERGY-ABSORBING BRACKET AND USE OF SUCH BRACKET**
ENERGIEABSORBIERENDE KLAMMER UND VERWENDUNG EINER SOLCHEN KLAMMER
SUPPORT D'ABSORPTION D'ÉNERGIE ET UTILISATION D'UN TEL SUPPORT

(30) Priority: 27.11.2020 SE 2051382
(43) Date of publication of application: 01.06.2022
(73) Proprietor: Work System Sweden AB, 561 61 Tenhult (SE)
(72) Inventor: Hallenborg, Jonas, 553 24 Jönköping (SE)
(74) Representative: Bergenstråhle & Partners AB

(56) References cited:
- WO-A1-2014/041241
- WO-A1-2019/020401
- US-A- 6 059 313

## Description

### Technical field

The present invention relates to an energy-absorbing bracket for use when anchoring equipment and items to an inner surface of a cargo space of a vehicle, for example in the cargo space or back space of a service vehicle or work vehicle.

### Background art

It is known within the art to equip a cargo space, at for example a service vehicle, with different kinds of more or less modular systems, like cupboards, shelves, boxes, tool holders, etc. Once the vehicle has been manufactured, a separate step of equipping the vehicle with different kind of interior, tailor made or modular, takes place. This step may also include to provide the cargo space with separate floor, walls, and ceiling, for example made by wood, depending on which type of interior is needed. Other modular systems may include to directly fit for example specially adapted rails etc. to the insides of the cargo space.

The modular systems are as mentioned fixedly fitted to the walls/inside surfaces, to prevent the interior items, like cupboards, shelves etc. from falling or moving inside the cargo space. This is normally done by securing the items to the insides by different kind of brackets and fastening means, either directly to the inside surfaces (walls, ceiling or floor) or to rails which in turn are attached to the insides. Another important issue, related to the securing of the interior items to the cargo space, concerns crash-safety. Since the modular units normally are used to store and transport heavy tools and toolkits, there is a risk connected to severe acceleration or deceleration of the vehicle, for example at a collision of the vehicle. If the modular units are not properly secured inside the cargo space of the vehicle, the units may not only get damaged but may also be a great risk to persons sitting in the cabin, in the event of a crash.

There are a number of attachment systems at the market, which include different kinds of brackets, normally made of metal, and which are anchored to rails or directly to insides of the cargo space of the service vehicle by for example, screws, bolts or other types of securing means. In the event of a crash with the vehicle, the brackets and the securing means must take care of extreme forces. Crash tests and knowledge from real accidents have pointed out that the weakest spot often is where the items/the modular systems are attached to the vehicle, or to the rail system. Brackets or the fastening means are often broken due to severe forces caused by the severe deceleration of the vehicle, for example at a front collision. It is crucial to absorb the crash-energy in different ways, to reduce the risk of broken brackets or fastening means. Of course, to reduce or absorb the crash-energy is also crucial for the interior itself, which will not be subjected to such high forces if the energy is absorbed by the anchoring system.

One solution is presented in SE 0900992 A1, which disclose a bracket with a weakened portion, which is designed to stretch in the event of a crash. The weakened portion of the bracket is designed with a number of slits, arranged transverse to the stretch-direction, and which slits provide an absorbing function to the bracket. Another solution is presented in WO 2017/001455 A1, which instead discloses a rail system in which an item secured to the rail system is arranged to move along the rail when subjected to a force above a predefined threshold value and to not move when subjected to forces below that threshold value. This solution is quite complicated with a lot of parts and thereby expensive, and further, the system is quite complicated and time consuming to install. Prior art solutions do not provide a controlled "behavior" in the event of a crash, which means that when a severe deceleration actually occurs, and for example the threshold value is exceeded (like in WO 2017/001455 A1), there is no control over the subsequent "behavior" of for example the bracket/rail system during the deceleration down to zero (i.e. until the crash is over).

Another known solution is presented in US 6 059 313 A, which discloses a bracket for anchoring an item to an inner surface of a cargo space of a vehicle according to the preamble of claim 1, which bracket includes a first anchoring portion in a first plane for anchoring against a surface by means of bolts, and a second anchoring portion in a second plane for attachment to an item (a grid) via a slot-like opening. Between these anchoring portions there is an expansion portion which has one wave ridge and one wave valley, both with the same wave height relative to a common axis of symmetry. The solution is designed to stretch in the event of a crash but not in a controlled manner and not such that a varying crash force is taken care of in a secure manner.

Yet another solution is presented in WO 2019/020401 A1, which presents a bracket which includes a first anchoring portion and a second anchoring portion which is angled in relation to the first anchoring portion. Furthermore, there is an expansion portion consisting of a double folding of the bracket material in the same plane, wherein the bracket is designed to stretch in the event of a crash but not in a controlled manner and not such that a varying crash force is taken care of in a secure manner.

To reduce the risks described above in the event of a crash and to take care of crash-energy during the complete crash sequence, it is desirable to provide a solution which is cost effective and easy to install and which further provides a controlled absorption of energy caused by for example a crash with the vehicle.

### Summary of the invention

It is an object of the invention to address at least some of the problems and issues outlined above. It is possible to achieve these objects and others by a bracket as defined in the attached independent claims, which by its design is able to absorb shock-forces/energy-forces in the event of a crash with a vehicle in which items/equipment are anchored by the bracket to an inner surface of the vehicle.

According to an aspect of the invention, an energy-absorbing bracket for anchoring an item to an inner surface of a cargo space of a vehicle, is disclosed. The bracket comprises a first side which faces said inner surface when the bracket is anchored thereto, and a second side opposite the first side and thus faces the cargo space in the mounted position on the inner surface of the vehicle. The inner surface of the vehicle has an extension in a first direction which substantially is a travelling direction of a vehicle. The bracket comprises a first anchoring portion, arranged for attachment with its first side to said inner surface (which first side is the same as the first side of the bracket) wherein the first anchoring portion has a first extension plane in the first direction, thus, the extension plane of the first anchoring portion is to be arranged along the inner surface, which substantially is in the travelling direction of the vehicle. The bracket further comprises a second anchoring portion, which is arranged for attachment to said item, wherein the item may be secured to the inner surface of the vehicle via the first and second anchoring portions. To absorb energy, at least in the travelling direction (the first direction) of the vehicle, the bracket further comprises an expansion portion, which is arranged between, and connecting the first and second anchoring portions. The expansion portion has an extension in the first direction, which by that is an extension along the first extension plane, and the expansion portion is arranged to expand at least in the first direction by being accordion-shaped in the first direction.

By that the expansion portion being accordion-shaped, the energy-absorption is achieved by that the "wave-form" is stretched out if the bracket is subjected to a traction force. Such a form may also be compressed if the bracket is subjected to a compression force. The bracket is however mainly designed to take care of a traction force in the first direction, why the bracket normally is arranged with the second anchoring portion closer to the cabin of the vehicle, and the first anchoring portion "behind" the expansion portion, relating to a mounted position in the cargo space of a vehicle. The second anchoring portion may be flat and arranged in the same first extension plane as the first anchoring portion or have a plane with another angle compared to the first extension plane of the first anchoring portion. By the accordion-shaped design, with a specially adapted expansion portion, the bracket absorbs energy caused by severe deceleration, in a controlled manner. The material of the bracket is preferably steel sheet, and the accordion-shaped expansion portion may be designed to control the absorption during different phases during a collision, by for example the "waves" being of similar or different height, or being of similar width or different width and so on. Even the material thickness may vary over the accordion-shaped expansion portion, to provide "designed" expansion properties. No prior art solutions provide such characteristics.

According to the invention, the accordion-shape of the expansion portion is substantially symmetrically arranged along a symmetry axis, wherein ridges and valleys of the accordion-shaped expansion portion have a peak height relative the central axis and wherein the ridges faces the first side of the bracket and the valleys facing the second side of the bracket. The definition of ridges and valleys are thus related to the mounted position of the bracket to the inner surface of the vehicle, where the ridges face the inner surface and the valleys protrudes away from the inner surface, i.e. inwards towards the cargo space of the vehicle. Such a solution, with a symmetric design, is rather easy to manufacture and provides a controlled behavior of the absorption of energy in the event of a crash or a severe deceleration.

According to the invention, the peak height of the ridges and valleys relative the central axis varies between adjacent ridges and valleys, such as a "wave-height" changes in direction from the second anchoring portion towards the first anchoring portion. By the changing "wave-height" the force may be absorbed in a controlled and designed manner.

According to an embodiment, the peak height of the ridges and valleys relative the central axis gradually decreases in direction from the second anchoring portion towards the first anchoring portion, such as a first ridge has a peak height which is higher than a peak height of an adjacent first valley and so on, in direction from the second anchoring portion towards the first anchoring portion. Such a solution is very effective in absorbing traction energy in a controlled manner. By that the "wave-height" of the accordion-shaped expansion portion decreases from the second anchoring portion towards the first anchoring portion, that is in the first direction or forwards, relative the driving direction of the vehicle, the force is absorbed along this direction in chronological order from the "first wave" to "the last wave". Tests has proven that the bracket extends wave by wave (or ridge by valley) from the second anchoring portion towards the first anchoring portion, which means that a controlled and dampening function is achieved. By the decreasing height of adjacent ridges and waves, it is harder and harder to straighten the bracket by a traction force, why this dampening function is achieved. This provides the controlled energy-absorbing characteristics which has proven very good to prevent items, anchored by the bracket to inner surfaces like rails or walls, from loosening from their anchored positions inside the vehicle. Thus, the fastening means, the frames of shelves, racks etc. can manage the forces without being broken, which also reduces the risk of injuries to persons inside the cabin of the vehicle.

According to an embodiment, the peak height of the ridges and valleys relative the central axis gradually increases in direction from the second anchoring portion towards the first anchoring portion, such as a first ridge has a peak height which is lower than a peak height of an adjacent first valley and so on, in direction in direction from the second anchoring portion towards the first anchoring portion. This is an alternative solution with a mirrored design compared to the one described above.

According to an embodiment, the peak height of the ridges and valleys relative the central axis pairwise gradually decreases in direction from the second anchoring portion towards the first anchoring portion, such as a first pair of one ridge and one adjacent valley has the same peak height which is higher than an the peak height of an adjacent second pair of one ridge and one adjacent valley, and so on, in direction from the second anchoring portion towards the first anchoring portion. This is yet another alternative solution compared to the ones described above. Of course, it is understood that the inventive concept may be achieved by other combinations of different peak height of the ridges and valleys.

According to an embodiment, the peak height of the ridges and valleys relative the central axis pairwise gradually increases in direction from the second anchoring portion towards the first anchoring portion, such as a first pair of one ridge and one adjacent valley has the same peak height which is lower than an the peak height of an adjacent second pair of one ridge and one adjacent valley, and so on, in direction from the second anchoring portion towards the first anchoring portion. This is yet another alternative solution compared to the ones described above. Of course, it is understood that the inventive concept may be achieved by other combinations of different peak height of the ridges and valleys.

According to an embodiment, the symmetry axis of the accordion-shaped expansion portion has a first angle relative the first extension plane of the first anchoring portion. Such a solution provides that the accordion-shaped expansion portion may be arranged to not interfere with the first extension plane, for example to be able to fixedly attach the bracket to a flat inner surface. The angle preferably is rather small, since the expansion of the accordion-shaped expansion portion is substantially taking place in the first direction, which substantially is the travelling direction of a vehicle. It is of course also possible, within the inventive concept, to let the first angle be zero or close to zero, since the bracket may flex at the expansion portion, if mounted to a flat surface.

According to an embodiment, the first angle is chosen such as the ridges do not protrude above the first extension plane. The angle thereby depends on the peak height of the highest ridges, and by that the bracket is mountable on a flat inner surface of a vehicle.

According to an embodiment, the second anchoring portion has a second extension plane which coincides with the first extension plane of the first anchoring portion. This means that the bracket is substantially flat in its design, which means that the overall look is flat, except the accordion-shape of the expansion portion.

According to an embodiment, at least a part of a second extension plane of the second anchoring portion has a second angle relative the first extension plane of the first anchoring portion. Such a solution provides an easy way of mounting items to the bracket since the angled bracket protrudes from the inner surface of the vehicle in its mounted position thereon.

According to an embodiment, the second angle between the first extension plane of the first anchoring portion and the second extension plane of the second anchoring portion is larger than 90°.

According to an embodiment, the ridges and valleys of the accordion-shaped expansion portion have a sinus-formed design. This means that each ridge and valley have a radius at the peak and thereby has a smooth design. Such a solution reduces the risk of that the bracket will snap (break) in a sudden severe deceleration resulting in a high peak force.

According to an embodiment, the ridges and valleys of the accordion-shaped expansion portion have a toothed design. This means that each ridge and valley have a sharp-edged peak, which is an alternative design, which in some cases may be convenient and good enough.

According to an embodiment, the ridges and valleys of the accordion-shaped expansion portion have a "square-pulsed design". This means that the accordion-shape looks like a "rectangular pulse", manufactured by bending each ridge and valley of the expansion portion in substantially 90° angles. Of course, it is understood that the inventive concept may be achieved by other forms of the accordion-shape of the expansion portion.

According to an aspect of the invention, a use of a bracket according to any of the preceding claims for anchoring an item to an inner surface of a cargo space of a vehicle, is disclosed.

Further possible features and benefits of this solution will become apparent from the detailed description below.

### Brief description of drawings

The solution will now be described in more detail by means of exemplary embodiments and with reference to the accompanying drawings, in which:
Fig. 1 is a view of an energy-absorbing bracket according to the invention, seen obliquely from above.
Fig. 2a is a top view of the inventive bracket of Fig. 1.
Fig. 2b is a zoomed view of the left part of the inventive bracket as seen in Fig. 1.
Fig. 3a is view of an item (i.e. a frame of an interior storage shelf), seen from a front side and obliquely from above and which is to be anchored to an inner surface of a cargo space of a vehicle (not shown), by means of the energy-absorbing bracket of Fig. 1.
Fig. 3b is a zoomed view of Fig. 3a showing the inventive bracket and its attachment to the item and to be anchored to an inner surface of a vehicle (not shown).
Fig. 4a is view of the item (frame) of Fig. 3a, seen from a back view and obliquely from above, wherein the energy-absorbing bracket of Fig. 1 may be seen from its backside.
Fig. 4b is a zoomed view of Fig. 4a showing the inventive bracket and its attachment to the item (frame).

### Detailed description

Briefly described, an energy-absorbing bracket and use of such bracket, is disclosed. The inventive design provides a solution which absorbs traction force in a controlled manner during a crash-sequence.

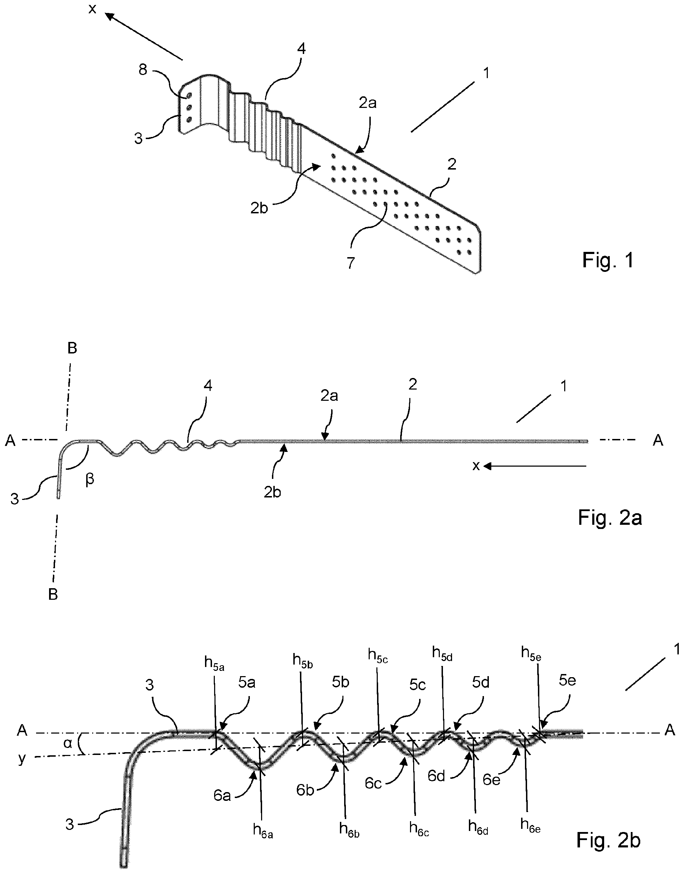

Fig. 1 shows a view of an energy-absorbing bracket 1 according to the invention, seen obliquely from above. The bracket 1 is used for anchoring an item to an inner surface of a cargo space of a vehicle. The bracket 1 comprises a first side 2a which faces the inner surface of the vehicle when the bracket 1 is anchored to that surface, and a second side 2b, which is arranged opposite the first side 2a and thus faces the cargo space in the mounted position. The inner surface of the vehicle has an extension in a first direction x, which substantially is a travelling direction of a vehicle. The bracket 1 comprises a first anchoring portion 2 arranged for attachment to the inner surface with its first side 2a (which in the preferred embodiment is the same as the first side of the bracket), and which anchoring portion 2 has a first extension plane A, similar with the first direction x (see Fig. 2a-b). The first anchoring portion 2 comprises holes 7, which are arranged for fastening means like screws or the like, to be able to fixedly attach the bracket 1 to an inner surface of a vehicle or a rail system or the like, which in turn is attached to the inside of the vehicle. The bracket 1 further comprises a second anchoring portion 3, which is arranged for anchoring an item such as a shelf, a box, a rail etc. which may be a part of a modular system or interior system for a service vehicle or the like. The second anchoring portion 3 comprises holes 8, which are arranged for fastening means like screws or the like, to fixedly attach the item to the bracket 1. Between the first and second anchoring portions 2, 3 is an expansion portion 4 arranged, which connects the first and second anchoring portions 2, 3. The expansion portion 4 has an extension in the first direction x, which by that coincides with the first extension plane A (see Fig. 2a-b). The expansion portion 4 is arranged to expand at least in the first direction x (along the first extension plane A) by being accordion-shaped. In the preferred embodiment, the second anchoring portion 3 has at least a small part arranged in the first extension plane A, which by that has an extension in the first direction, but the main part is bent in an angle relative the first extension plane A to provide an easy mounting of an item to the bracket. This will be further explained below. Of course, the second anchoring portion 3 may be straight or have other angles as well.

Fig. 2a shows a top view of the inventive bracket 1 and Fig. 2b shows a zoomed view of the left part of the bracket 1 seen in Fig. 2a. The first anchoring portion 2 has its first extension plane A arranged with the same orientation as the first direction x, and the second anchoring portion 3 has a second extension plane B, wherein the main a part of the second extension plane B has a second angle β relative the first extension plane A. This second angle β preferably is slightly larger than 90°, to provide an easy mounting of an item to the bracket 1. A small part of the second anchoring portion 3 is arranged in the first extension plane A and is connected to the expansion portion 4.

According to the preferred embodiment, the accordion-shape of the expansion portion 4 is substantially symmetrically arranged along a symmetry axis y, such as ridges 5a, 5b, ...5n and valleys 6a, 6b, ...6n of the accordion-shaped expansion portion 4 have a peak height h relative the central axis y. The overall design of the expansion portion 4 is a waveform, with a number of waves defined in this application as ridges 5a, 5b, ...5n and valleys 6a, 6b, ...6n, wherein the number of waves may vary within the scope of the invention. In the shown embodiment, there are five ridges 5a, 5b, ...5e and five valleys 6a, 6b, ...6e, but it may less or more waves, from a few up to n waves. In the mounted position of the bracket 1 to an inner surface of a vehicle, the ridges 5a, 5b, ...5n face the first side 2a of the bracket 1 and the valleys 6a, 6b, ...6n face the second side 2b of the bracket 1. The peak height h of the ridges 5a, 5b, ...5n and valleys 6a, 6b, ...6n relative the central axis y gradually decreases in direction from the second anchoring portion 3 towards the first anchoring portion 2. This means that a first ridge 5a has a peak height h₅ₐ which is higher than a peak height h₆ₐ of an adjacent first valley 6a and so on, in direction from the second anchoring portion 3 towards the first anchoring portion 2.

Within the inventive concept, the waves may be of equal height, may have a mirrored design compared to Fig. 2a-b, have pairwise or other combinations of waves with decreasing or increasing pattern, and so on. But the most preferred embodiment is the one with a decreasing waveform from the second anchoring portion 3 towards the first anchoring portion 2. This, such as the expansion portion 4 will expand in the first direction x when subjected to a traction force, in a controlled manner, with the first wave 5a, 6a, being the first to expand, and with increasing force, one by one of the following waves being expanded. This gives a dampening function because the "expansion force" must increase more and more to make the bracket 1 expand. As told before, this dampening effect also is positive to reduce the risk of that other parts, like fastening means, items like shelves, racks, rails and the like, break due to high force.

In the preferred embodiment, the symmetry axis y of the accordion-shaped expansion portion 4 has a first angle α relative the first extension plane A of the first anchoring portion 2. This first angle α is chosen such as the ridges 5a, 5b, ...5n of the expansion portion 4 do not protrude above the first extension plane A, to provide an easy mounting to a flat inner side of a vehicle, to which the bracket 1 should be mounted.

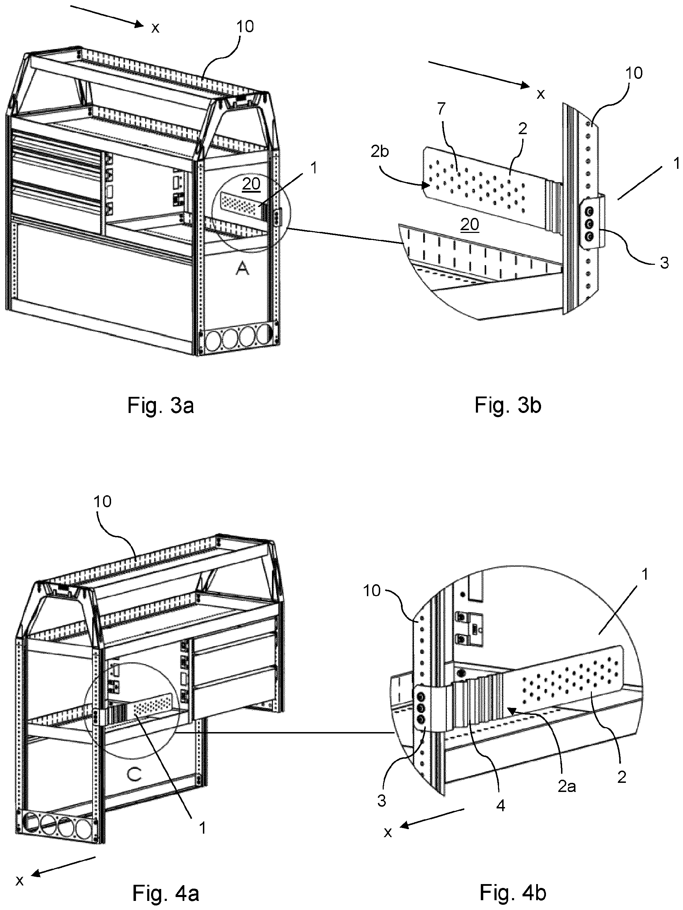

Fig. 3a is view of an item 10, i.e. a frame 10 of an interior storage shelf, which are to be secured inside the cargo space of for example a work vehicle. The frame 10 is seen from a front side (cargo space side), where the second side 2b of the bracket 1 faces the cargo space side, and by that faces away from an inner side 20 of the vehicle (not shown). The view is seen obliquely from above and the bracket 1 is to be anchored to the inner surface 20, by means of the energy-absorbing bracket 1. Fig. 3b is a zoomed view which shows the inventive bracket 1 and its attachment to the frame 10 which are to be anchored to the inner surface 20 of a vehicle (not shown). The first direction x is as told the travelling direction of the vehicle, and the bracket 1 is to be anchored to the inner side 20 with the first anchoring portion 2 arranged along the inner surface 20. The holes 7 of the first anchoring portion 2 are arranged for fastening means (not shown), for example screws or the like. The bracket 1 is arranged such as the second anchoring portion 3 is arranged at the front side of the frame 10, relating to the first direction x (travelling direction). The second anchoring portion 3 is fixedly attached to the frame 10 by some kind of fastening means.

Fig. 4a is view of the frame 10 of Fig. 3a, seen from a back view (inner surface side) and obliquely from above, wherein the energy-absorbing bracket 1 of may be seen from its backside, with the first side 2a facing the inner side 20 of the vehicle (not shown). Fig. 4b is a zoomed view of Fig. 4a showing the inventive bracket 1 and its attachment to the frame 10.

In the event of a crash or a sudden and severe deceleration, the frame 10, the bracket 1 and the fastening means are subjected to a massive force, but due to the inventive bracket 1, the item 10 (exemplified by the frame 10) will be allowed to move a short distance in the first direction x by that the expansion portion 4 of the bracket 1 will expand the way explained above. The design of the expansion portion 4, with the preferred accordion-shape with different heights of the respective "waves" will dampen the motion with a controlled "response" at different stages (forces) during the deceleration down to zero.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited other than by the appended claims. Reference to an element in the singular is not intended to mean "one and only one" unless explicitly so stated, but rather "one or more." All structural and functional equivalents to the elements of the above-described embodiments that are known to those of ordinary skill in the art are expressly incorporated herein and are intended to be encompassed hereby.

## Claims

1. Energy-absorbing bracket (1) for anchoring an item to an inner surface of a cargo space of a vehicle, wherein the bracket (1) comprises a first side (2a) which faces said inner surface when the bracket (1) is anchored thereto, and a second side (2b) opposite the first side (2a) and thus faces the cargo space in the mounted position, wherein the inner surface of the vehicle having an extension in a first direction (x), which substantially is a travelling direction of a vehicle, the bracket (1) comprising:
a first anchoring portion (2) arranged for attachment to said inner surface, wherein the first anchoring portion (2) has a first extension plane (A) in the first direction (x),
a second anchoring portion (3) arranged for attachment to said item,
an expansion portion (4), arranged between and connecting the first and second anchoring portions (2, 3), wherein the expansion portion (4) has an extension in the first direction (x), wherein the expansion portion (4) is arranged to expand at least in the first direction (x) by being accordion-shaped in the first direction (x), wherein the accordion-shape of the expansion portion (4) is substantially symmetrically arranged along a symmetry axis (y), wherein ridges (5a, 5b, ...5n) and valleys (6a, 6b, ...6n) of the accordion-shaped expansion portion (4) having a peak height (h) relative the symmetry axis (y), wherein the ridges (5a, 5b, ...5n) facing the first side (2a) of the bracket (1) and the valleys (6a, 6b, ...6n) facing the second side (2b) of the bracket (1), **characterized by that** the peak height (h) of the ridges (5a, 5b, ...5n) and valleys (6a, 6b, ...6n) relative the central axis (y) varies between adjacent ridges (5a, 5b, ...5n) and valleys (6a, 6b, ...6n), such as a "wave-height" changes in direction from the second anchoring portion (3) towards the first anchoring portion (2).

2. Bracket (1) according to claim 1, wherein the peak height (h) of the ridges (5a, 5b, ...5n) and valleys (6a, 6b, ...6n) relative the central axis (y) gradually decreases in direction from the second anchoring portion (3) towards the first anchoring portion (2), such as a first ridge (5a) has a peak height (h₅ₐ) which is higher than a peak height (h₆ₐ) of an adjacent first valley (6a) and so on, in direction from the second anchoring portion (3) towards the first anchoring portion (2).

3. Bracket (1) according to claim 1, wherein the peak height (h) of the ridges (5a, 5b, ...5n) and valleys (6a, 6b, ...6n) relative the central axis (y) gradually increases in direction from the second anchoring portion (3) towards the first anchoring portion (2), such as a first ridge (5a) has a peak height (h₅ₐ) which is lower than a peak height (h₆ₐ) of an adjacent first valley (6a) and so on, in direction in direction from the second anchoring portion (3) towards the first anchoring portion (2).

4. Bracket (1) according to claim 1, wherein the peak height (h) of the ridges (5a, 5b, ...5n) and valleys (6a, 6b, ...6n) relative the central axis (y) pairwise gradually decreases in direction from the second anchoring portion (3) towards the first anchoring portion (2), such as a first pair of one ridge (5a) and one adjacent valley (6a) has the same peak height (h₅ₐ, h₆ₐ) which is higher than an the peak height (h_{5b}, h_{6b}) of an adjacent second pair of one ridge (5b) and one adjacent valley (6b), and so on, in direction from the second anchoring portion (3) towards the first anchoring portion (2).

5. Bracket (1) according to claim 1, wherein the peak height (h) of the ridges (5a, 5b, ...5n) and valleys (6a, 6b, ...6n) relative the central axis (y) pairwise gradually increases in direction from the second anchoring portion (3) towards the first anchoring portion (2), such as a first pair of one ridge (5a) and one adjacent valley (6a) has the same peak height (h₅ₐ, h₆ₐ) which is lower than an the peak height (h_{5b}, h_{6b}) of an adjacent second pair of one ridge (5b) and one adjacent valley (6b), and so on, in direction from the second anchoring portion (3) towards the first anchoring portion (2).

6. Bracket (1) according to any of the preceding claims, wherein the symmetry axis (y) of the accordion-shaped expansion portion (4) has a first angle (α) relative the first extension plane (A) of the first anchoring portion (2).

7. Bracket (1) according to claim 6, wherein the first angle (α) is chosen such as the ridges (5a, 5b, ...5n) do not protrude above the first extension plane (A).

8. Bracket (1) according to any of the preceding claims, wherein the second anchoring portion (3) has a second extension plane (B) which coincides with the first extension plane (A) of the first anchoring portion (2).

9. Bracket (1) according to any of claims 1-7, wherein at least a part of a second extension plane (B) of the second anchoring portion (3) has a second angle (β) relative the first extension plane (A) of the first anchoring portion (2).

10. Bracket (1) according to claim 9, wherein the second angle (β) between the first extension plane (A) of the first anchoring portion (2) and the second extension plane (B) of the second anchoring portion (3) is larger than 90°.

11. Bracket (1) according to any of the preceding claims, wherein the ridges (5a, 5b, ...5n) and valleys (6a, 6b, ...6n) of the accordion-shaped expansion portion (4) having a sinus-formed design.

12. Bracket (1) according to any of claims 1-10, wherein the ridges (5a, 5b, ...5n) and valleys (6a, 6b, ...6n) of the accordion-shaped expansion portion (4) having a toothed design.

13. Bracket (1) according to any of claims 1-10, wherein the ridges (5a, 5b, ...5n) and valleys (6a, 6b, ...6n) of the accordion-shaped expansion portion (4) having a square-pulsed design.

14. Use of a bracket (1) according to any of the preceding claims for anchoring an item to an inner surface of a cargo space of a vehicle.

## Patentansprüche

1. Energieabsorbierende Klammer (1) zum Verankern eines Gegenstands an einer Innenfläche eines Laderaums eines Fahrzeugs, wobei die Klammer (1) eine erste Seite (2a), die der Innenfläche zugewandt ist, wenn die Klammer (1) daran verankert ist, und eine zweite Seite (2b), die der ersten Seite (2a) entgegengesetzt und somit in der Montagestellung dem Laderaum zugewandt ist, umfasst, wobei die Innenfläche des Fahrzeugs eine Ausdehnung in eine erste Richtung (x) aufweist, die im Wesentlichen die Fahrtrichtung des Fahrzeugs ist, wobei die Klammer (1) Folgendes umfasst:
einen ersten Verankerungsabschnitt (2), der zur Befestigung an der Innenfläche angeordnet ist, wobei der erste Verankerungsabschnitt (2) eine erste Ausdehnungsebene (A) in die erste Richtung (x) aufweist,
einen zweiten Verankerungsabschnitt (3), der zur Befestigung an dem Gegenstand angeordnet ist,
einen Erweiterungsabschnitt (4), der zwischen dem ersten und zweiten Verankerungsabschnitt (2, 3) angeordnet ist und diese miteinander verbindet, wobei der Erweiterungsabschnitt (4) eine Ausdehnung in die erste Richtung (x) aufweist, wobei der Erweiterungsabschnitt (4) dazu angeordnet ist, sich zumindest in die erste Richtung (x) zu erweitern, indem er in die erste Richtung (x) ziehharmonikaförmig ist, wobei die Ziehharmonikaform des Erweiterungsabschnitts (4) entlang einer Symmetrieachse (y) im Wesentlichen symmetrisch angeordnet ist, wobei die Höhen (5a, 5b, ... 5n) und Tiefen (6a, 6b, ... 6n) des ziehharmonikaförmigen Erweiterungsabschnitts (4) eine maximale Höhe (h) in Bezug zur Symmetrieachse (y) aufweisen, wobei die Höhen (5a, 5b, ... 5n) der ersten Seite (2a) der Klammer (1) zugewandt sind und die Tiefen (6a, 6b, ... 6n) der zweiten Seite (2b) der Klammer (1) zugewandt sind, **dadurch gekennzeichnet, dass** die maximale Höhe (h) der Höhen (5a, 5b, ... 5n) und Tiefen (6a, 6b, ... 6n) in Bezug zur Mittelachse (y) zwischen angrenzenden Höhen (5a, 5b, ... 5n) und Tiefen (6a, 6b, ... 6n) derart variiert, wie eine "Wellenhöhe" vom zweiten Verankerungsabschnitt (3) zum ersten Verankerungsabschnitt (2) die Richtung wechselt.

2. Klammer (1) nach Anspruch 1, wobei die maximale Höhe (h) der Höhen (5a, 5b, ... 5n) und Tiefen (6a, 6b, ... 6n) in Bezug zur Mittelachse (y) in die Richtung vom zweiten Verankerungsabschnitt (3) zum ersten Verankerungsabschnitt (2) schrittweise abnimmt, sodass eine erste Höhe (5a) eine maximale Höhe (h₅ₐ) aufweist, die höher ist als die maximale Höhe (h₆ₐ) einer angrenzenden ersten Tiefe (6a) und so weiter, in die Richtung vom zweiten Verankerungsabschnitt (3) zum ersten Verankerungsabschnitt (2).

3. Klammer (1) nach Anspruch 1, wobei die maximale Höhe (h) der Höhen (5a, 5b, ... 5n) und Tiefen (6a, 6b, ... 6n) in Bezug zur Mittelachse (y) in die Richtung vom zweiten Verankerungsabschnitt (3) zum ersten Verankerungsabschnitt (2) schrittweise zunimmt, sodass eine erste Höhe (5a) eine maximale Höhe (h₅ₐ) aufweist, die niedriger ist als die maximale Höhe (h₆ₐ) einer angrenzenden ersten Tiefe (6a) und so weiter, in die Richtung vom zweiten Verankerungsabschnitt (3) zum ersten Verankerungsabschnitt (2).

4. Klammer (1) nach Anspruch 1, wobei die maximale Höhe (h) der Höhen (5a, 5b, ... 5n) und Tiefen (6a, 6b, ... 6n) in Bezug zur Mittelachse (y) in die Richtung vom zweiten Verankerungsabschnitt (3) zum ersten Verankerungsabschnitt (2) paarweise schrittweise abnimmt, sodass ein erstes Paar aus einer Höhe (5a) und einer angrenzenden Tiefe (6a) dieselbe maximale Höhe (h₅ₐ, h₆ₐ) aufweist, die höher ist als die maximale Höhe (h_{5b}, h_{6b}) eines angrenzenden zweiten Paars aus einer Höhe (5b) und einer angrenzenden Tiefe (6b) und so weiter, in die Richtung vom zweiten Verankerungsabschnitt (3) zum ersten Verankerungsabschnitt (2).

5. Klammer (1) nach Anspruch 1, wobei die maximale Höhe (h) der Höhen (5a, 5b, ... 5n) und Tiefen (6a, 6b, ... 6n) in Bezug zur Mittelachse (y) in die Richtung vom zweiten Verankerungsabschnitt (3) zum ersten Verankerungsabschnitt (2) paarweise schrittweise zunimmt, sodass ein erstes Paar aus einer Höhe (5a) und einer angrenzenden Tiefe (6a) dieselbe maximale Höhe (h₅ₐ, h₆ₐ) aufweist, die niedriger ist als die maximale Höhe (h_{5b}, h_{6b}) eines angrenzenden zweites Paars aus einer Höhe (5b) und einer angrenzenden Tiefe (6b) und so weiter, in die Richtung vom zweiten Verankerungsabschnitt (3) zum ersten Verankerungsabschnitt (2).

6. Klammer (1) nach einem der vorstehenden Ansprüche, wobei die Symmetrieachse (y) des ziehharmonikaförmigen Erweiterungsabschnitts (4) einen ersten Winkel (α) in Bezug zur ersten Ausdehnungsebene (A) des ersten Verankerungsabschnitts (2) aufweist.

7. Klammer (1) nach Anspruch 6, wobei der erste Winkel (α) derart ausgewählt ist, dass die Höhen (5a, 5b, ... 5n) nicht über die erste Ausdehnungsebene (A) vorstehen.

8. Klammer (1) nach einem der vorstehenden Ansprüche, wobei der zweite Verankerungsabschnitt (3) eine zweite Ausdehnungsebene (B) aufweist, die mit der ersten Ausdehnungsebene (A) des ersten Verankerungsabschnitts (2) zusammenfällt.

9. Klammer (1) nach einem der Ansprüche 1-7, wobei zumindest ein Teil einer zweiten Ausdehnungsebene (B) des zweiten Verankerungsabschnitts (3) einen zweiten Winkel (β) in Bezug zur ersten Ausdehnungsebene (A) des ersten Verankerungsabschnitts (2) aufweist.

10. Klammer (1) nach Anspruch 9, wobei der zweite Winkel (β) zwischen der ersten Ausdehnungsebene (A) des ersten Verankerungsabschnitts (2) und der zweiten Ausdehnungsebene (B) des zweiten Verankerungsabschnitts (3) größer als 90° ist.

11. Klammer (1) nach einem der vorstehenden Ansprüche, wobei die Höhen (5a, 5b, ... 5n) und Tiefen (6a, 6b, ... 6n) des ziehharmonikaförmigen Erweiterungsabschnitts (4) sinusförmig gestaltet sind.

12. Klammer (1) nach einem der Ansprüche 1-10, wobei die Höhen (5a, 5b, ... 5n) und Tiefen (6a, 6b, ... 6n) des ziehharmonikaförmigen Erweiterungsabschnitts (4) zahnförmig gestaltet sind.

13. Klammer (1) nach einem der Ansprüche 1-10, wobei die Höhen (5a, 5b, ... 5n) und Tiefen (6a, 6b, ... 6n) des ziehharmonikaförmigen Erweiterungsabschnitts (4) rechteckwellenförmig gestaltet sind.

14. Verwendung einer Klammer (1) nach einem der vorstehenden Ansprüche zum Verankern eines Gegenstands an einer Innenfläche eines Laderaums eines Fahrzeugs.

## Revendications

1. Patte à absorption d'énergie (1) pour l'ancrage d'un article à une surface interne d'un espace de chargement d'un véhicule, la patte (1) comprenant un premier côté (2a) qui fait face à ladite surface interne lorsque la patte (1) y est ancrée, et un deuxième côté (2b) opposé au premier côté (2a) et faisant donc face à l'espace de chargement en position montée, la surface interne du véhicule ayant une extension dans une première direction (x), qui est sensiblement une direction de déplacement d'un véhicule, la patte (1) comprenant :
une première partie d'ancrage (2) agencée pour être attachée à ladite surface interne, la première partie d'ancrage (2) ayant un premier plan d'extension (A) dans la première direction (x),
une deuxième partie d'ancrage (3) agencée pour être attachée audit article,
une partie d'étirement (4) agencée entre les première et deuxième parties d'ancrage (2, 3) et reliant celles-ci, la partie d'étirement (4) ayant une extension dans la première direction (x), la partie d'étirement (4) étant agencée pour s'étirer au moins dans la première direction (x) en ayant une forme d'accordéon dans la première direction (x), la forme d'accordéon de la partie d'étirement (4) étant agencée sensiblement symétriquement le long d'un axe de symétrie (y), des crêtes (5a, 5b, ...5n) et des creux (6a, 6b, ...6n) de la partie d'étirement en forme d'accordéon (4) ayant une hauteur de pic (h) par rapport à l'axe de symétrie (y), les crêtes (5a, 5b, ...5n) faisant face au premier côté (2a) de la patte (1) et les creux (6a, 6b, ...6n) faisant face au deuxième côté (2b) de la patte (1), **caractérisée par le fait que** la hauteur de pic (h) des crêtes (5a, 5b, ...5n) et des creux (6a, 6b, ...6n) par rapport à l'axe central (y) varie entre des crêtes (5a, 5b, ...5n) et des creux (6a, 6b, ...6n) adjacents, de sorte qu'une « hauteur de vague » change en direction de la deuxième partie d'ancrage (3) vers la première partie d'ancrage (2).

2. Patte (1) selon la revendication 1, la hauteur de pic (h) des crêtes (5a, 5b, ...5n) et des creux (6a, 6b, ...6n) par rapport à l'axe central (y) diminuant progressivement en direction de la deuxième partie d'ancrage (3) vers la première partie d'ancrage (2), de sorte qu'une première crête (5a) a une hauteur de pic (h₅ₐ) qui est supérieure à une hauteur de pic (h₆ₐ) d'un premier creux (6a) adjacent et ainsi de suite, en direction de la deuxième partie d'ancrage (3) vers la première partie d'ancrage (2).

3. Patte (1) selon la revendication 1, la hauteur de pic (h) des crêtes (5a, 5b, ...5n) et des creux (6a, 6b, ...6n) par rapport à l'axe central (y) augmentant progressivement en direction de la deuxième partie d'ancrage (3) vers la première partie d'ancrage (2), de sorte qu'une première crête (5a) a une hauteur de pic (h₅ₐ) qui est inférieure à une hauteur de pic (h₆ₐ) d'un premier creux (6a) adjacent et ainsi de suite, en direction de la deuxième partie d'ancrage (3) vers la première partie d'ancrage (2).

4. Patte (1) selon la revendication 1, la hauteur de pic (h) des crêtes (5a, 5b, ...5n) et des creux (6a, 6b, ...6n) par rapport à l'axe central (y) diminuant progressivement par paire en direction de la deuxième partie d'ancrage (3) vers la première partie d'ancrage (2), de sorte qu'une première paire d'une crête (5a) et d'un creux (6a) adjacent a la même hauteur de pic (h₅ₐ, h₆ₐ) qui est supérieure à une hauteur de pic (h_{5b}, h_{6b}) d'une deuxième paire adjacente d'une crête (5b) et d'un creux (6b) adjacent et ainsi de suite, en direction de la deuxième partie d'ancrage (3) vers la première partie d'ancrage (2).

5. Patte (1) selon la revendication 1, la hauteur de pic (h) des crêtes (5a, 5b, ...5n) et des creux (6a, 6b, ...6n) par rapport à l'axe central (y) augmentant progressivement par paire en direction de la deuxième partie d'ancrage (3) vers la première partie d'ancrage (2), de sorte qu'une première paire d'une crête (5a) et d'un creux (6a) adjacent a la même hauteur de pic (h₅ₐ, h₆ₐ) qui est inférieure à une hauteur de pic (h_{5b}, h_{6b}) d'une deuxième paire adjacente d'une crête (5b) et d'un creux (6b) adjacent et ainsi de suite, en direction de la deuxième partie d'ancrage (3) vers la première partie d'ancrage (2).

6. Patte (1) selon l'une quelconque des revendications précédentes, l'axe de symétrie (y) de la partie d'étirement en forme d'accordéon (4) formant un premier angle (α) avec le premier plan d'extension (A) de la première partie d'ancrage (2).

7. Patte (1) selon la revendication 6, le premier angle (α) étant choisi de sorte que les crêtes (5a, 5b, ...5n) ne fassent pas saillie au-dessus du premier plan d'extension (A).

8. Patte (1) selon l'une quelconque des revendications précédentes, la deuxième partie d'ancrage (3) ayant un deuxième plan d'extension (B) qui coïncide avec le premier plan d'extension (A) de la première partie d'ancrage (2).

9. Patte (1) selon l'une quelconque des revendications 1 à 7, au moins une partie d'un deuxième plan d'extension (B) de la deuxième partie d'ancrage (3) formant un deuxième angle (β) avec le premier plan d'extension (A) de la première partie d'ancrage (2).

10. Patte (1) selon la revendication 9, le deuxième angle (β) entre le premier plan d'extension (A) de la première partie d'ancrage (2) et le deuxième plan d'extension (B) de la deuxième partie d'ancrage (3) étant supérieur à 90°.

11. Patte (1) selon l'une quelconque des revendications précédentes, les crêtes (5a, 5b, ...5n) et les creux (6a, 6b, ...6n) de la partie d'étirement en forme d'accordéon (4) ayant une conception de type sinusoïdale.

12. Patte (1) selon l'une quelconque des revendications 1 à 10, les crêtes (5a, 5b, ...5n) et les creux (6a, 6b, ...6n) de la partie d'étirement en forme d'accordéon (4) ayant une conception de type dentée.

13. Patte (1) selon l'une quelconque des revendications 1 à 10, les crêtes (5a, 5b, ...5n) et les creux (6a, 6b, ...6n) de la partie d'étirement en forme d'accordéon (4) ayant une conception de type à impulsion rectangulaire.

14. Utilisation d'une patte (1) selon l'une quelconque des revendications précédentes, pour l'ancrage d'un article sur une surface interne d'un espace de chargement d'un véhicule.
